# EUROPEAN PATENT SPECIFICATION

(11) **EP 2 101 250 B1**
(45) Date of publication and mention of the grant of the patent: **11.06.2014**
(21) Application number: 08152797.0
(22) Date of filing: 14.03.2008
(51) Int. Cl.: G06F 3/041, G06F 3/0488

(54) **Character selection on a device using offset contact-zone**
Zeichenauswahl auf einer Vorrichtung mittels versetzter Kontaktzone
Sélection de caractère sur un dispositif utilisant une zone de contact décalée

(43) Date of publication of application: 16.09.2009
(73) Proprietor: BlackBerry Limited, Waterloo, ON N2K 0A7 (CA)
(72) Inventor: Fyke, Steven, Waterloo Ontario N2L 6M1 (CA)
(74) Representative: Fennell, Gareth Charles

(56) References cited:
- EP-A- 0 618 528
- EP-A- 1 881 680
- EP-A- 1 895 382
- EP-A- 1 895 764
- WO-A1-00/16188
- WO-A1-2008/030880
- US-A- 5 801 941
- US-A1- 2004 183 833
- "METHOD TO IMPROVE THE USABILITY OF TOUCH-SCREEN PANELS FOR COMPUTERAPPLICATIONS" IBM TECHNICAL DISCLOSURE BULLETIN, IBM CORP. NEW YORK, US, vol. 32, no. 9B, 1 February 1990 (1990-02-01), pages 250-253, XP000082330 ISSN: 0018-8689

## Description

### FIELD

This disclosure, in a broad sense, relates to utilizing touch-sensitive input devices, and particularly to touch-sensitive input devices with a target-based user interface such as a touch-sensitive keyboard on a mobile device.

### BACKGROUND

Electronic devices are typically equipped with an input device which allows an operator to instruct or otherwise input data into the electronic device. Many electronic devices are equipped with physical keyboards for data entry. While many electronic devices have keyboards, others may instead use a touch sensitive screen for data entry.

As users rely more heavily on their electronic devices, they demand that the devices operate easily and intuitively. Many devices available for consumer purchase fall short of achieving such a goal. Furthermore, devices equipped with touchscreens or other contact sensitive keyboards often do not provide appropriate feedback to the operator. When inputting data using a touchscreen, the area of contact sensed by the touchscreen may be different than the portion of the touchscreen that the operator believes to have been actuated. It is desirable to provide a system that accounts for these and other similar inputting errors.

US 2004/0183833 A1 (Motorola) discloses a mobile phone with a virtual keyboard and a touch screen, and with individual virtual keys having their own representative positions. During a selection operation to select a key, the location of touch selection on the touch screen becomes the selected position. The distance between the selected position and adjacent representative positions is used to decide a first set of candidate keys. These candidate keys are then used to provide a set of potential words that would result from the input of any one of those keys. Once a key is confirmed as having been selected, the offset between the selected position and the representative position of that key is used to re-calibrate that representative position.

US 5,801,941 (IBM) discloses a computer in which entry of data from an area provided on a display, touch screen or the like is accomplished by the provision of a "soft keyboard". Miss-entry of data is avoided by providing for the calculation of an offset as may be required by a user's entry habits which target areas of a defined key cell spaced from the centre of the cell.

WO 00/16188 A1 (ERICSSON) discloses the selection of touchable items on a touch screen display and, more particularly, the method of configuring a target area within such touchable items which takes into account the angle of approach by the user for selection.

WO 2008/030880 A1 (APPLE) discloses adaptively determining a cursor position from a finger contact with a touch screen display and then performing operations according to the cursor position: the centroid of the touch area and the shape of the touch area are taken in account to determine a cursor position slightly offset from the centroid in the direction of the orientation of the touch area.

Main aspects of the subject invention are as set out in the independent claims. Principal subsidiary features are as set out in the dependent claims.

### BRIEF DESCRIPTION OF THE DRAWINGS

Examplary methods and arrangements conducted and configured according to the solutions presented herein are depicted in the accompanying drawings wherein:

FIG. 1 illustrates a mobile device configured according to the present disclosure cradled in the palm of a operator's hand;

FIG. 2 is a block diagram representing a mobile device interacting in a communication network;

FIG. 3A illustrates an examplary QWERTY keyboard layout;

FIG. 3B illustrates an examplary QWERTZ keyboard layout;

FIG. 3C illustrates an examplary AZERTY keyboard layout;

FIG. 3D illustrates an examplary Dvorak keyboard layout;

FIG. 4 illustrates a QWERTY keyboard layout paired with a ten-key keypad;

FIG. 5 illustrates ten digits comprising the numerals 0-9 arranged in a traditional numeric telephone keypad layout according to the ITU Standard E.161, including the * and # keys flanking the 0 key;

FIG. 6 illustrates a traditional telephone keypad layout according to the ITU Standard E.161, including both numerals and letters;

FIG. 7 illustrates a reduced keyboard layout according to the present disclosure;

FIG. 8 illustrates a full keyboard layout having oval shaped keys according to the present disclosure;

FIG. 9 illustrates a full keyboard layout having circular shaped keys according to the present disclosure;

FIG. 10A illustrates keys with their associated contact-zones;

FIG. 10B illustrates the keys of FIG. 10A with offset contact-zones;

FIG. 11A illustrates a pair of keys with an associated contact zone;

FIG. 11B illustrates the pair of keys of FIG. 11A with an offset contact-zone;

FIG. 11C illustrates the pair of keys of FIG. 11A with another offset contact-zone; and

FIG. 12 illustrates an examplary method of aligning a visually delineated character input key with an associated missed-key strike-zone on a mobile device.

### DETAILED DESCRIPTION

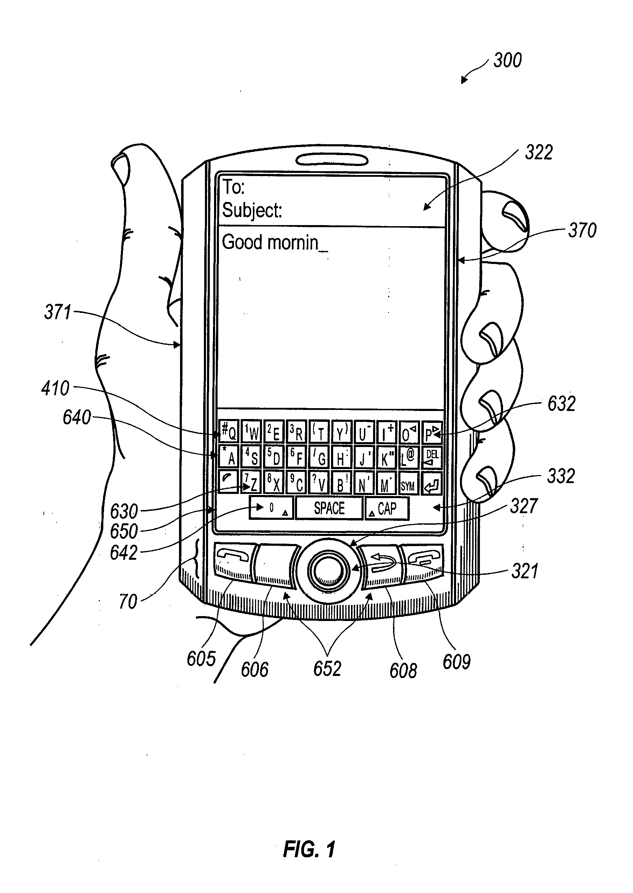

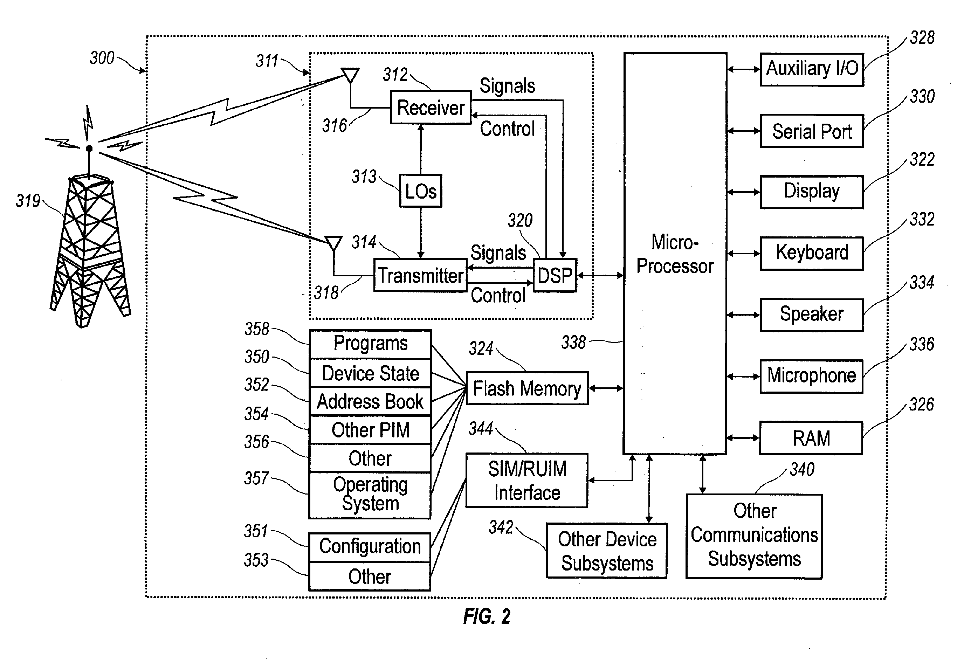

An examplary mobile device 300 is shown in FIG. 1, and the mobile device 300 in cooperation in a wireless network 319 is exemplified in the block diagram of FIG. 2. These figures are examplary only, and those persons skilled in the art will appreciate the additional elements and modifications necessary to make the mobile device 300 work in particular network environments. While in the illustrated embodiment, the mobile device 300 is a handheld wireless communication device, in other embodiments, the mobile device 300 may comprise a personal digital assistant (PDA), or the like. In yet other embodiments, the below presented alignment of a visible input key on a touch-sensitive keyboard with a corresponding offset contact-zone can be implemented on other computers, input terminals, or the like, in which the input mechanism includes a touchscreen or other surface that inputs data based upon a determined location of contact.

As shown in the block diagram of FIG. 2, the mobile device 300 includes a microprocessor 338 that controls the operation of the mobile device 300. A communication subsystem 311 performs all communication transmission and reception with the wireless network 319. The microprocessor 338 further connects with an auxiliary input/output (I/O) subsystem 328, a serial port (preferably a Universal Serial Bus port) 330, a display screen 322, a keyboard 332, a speaker 334, a microphone 336, random access memory (RAM) 326, and flash memory 324. Other communication subsystems 340 and other device subsystems 342 are generally indicated as being functionally connected with the microprocessor 338 as well. An example of a communication subsystem 340 is that of a short range communication system such as BLUETOOTH® communication module or a Wi-Fi communication module (a communication module in compliance with IEEE 802.11b) and associated circuits and components. Additionally, the microprocessor 338 is able to perform operating system functions and preferably enables execution of programs on the mobile device 300.

The auxiliary I/O subsystem 328 can take the form of a variety of different cursor navigation tools (multi-directional or single-directional) such as a trackball navigation tool 321 as illustrated in the examplary embodiment shown in FIG. 1, or a thumbwheel, a navigation pad, a joystick, touch sensitive interface, or other I/O interface. These cursor navigation tools 327 are preferably located on the front face 370 of the mobile device 300 but may be located on any exterior surface of the mobile device 300. Other auxiliary I/O subsystems can include external display devices and externally connected keyboards (not shown). While the above examples have been provided in relation to the auxiliary I/O subsystem 328, other subsystems capable of providing input or receiving output from the mobile device 300 are considered within the scope of this disclosure. Additionally, other keys may be placed along the side of the mobile device 300 to function as escape keys, volume control keys, scrolling keys, power switches, or user programmable keys.

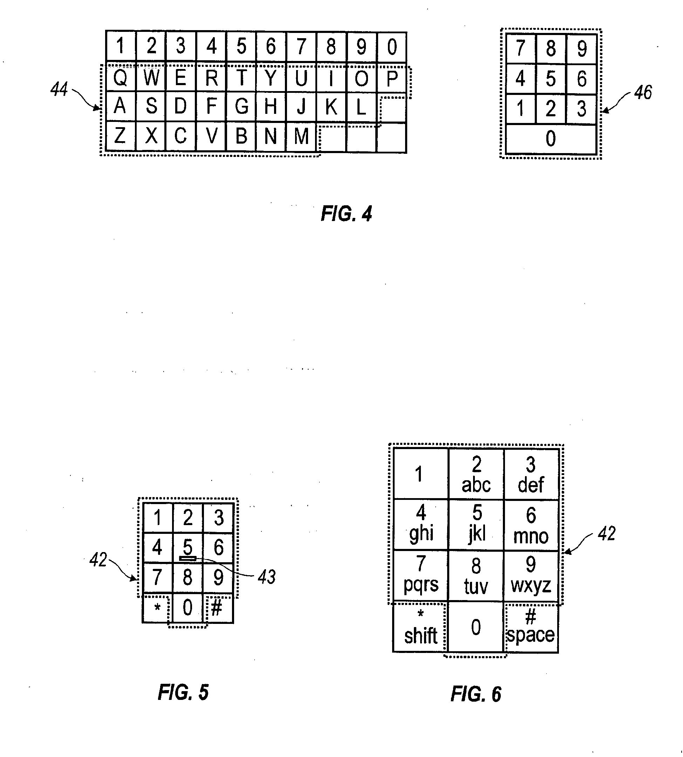

As may be appreciated from FIG. 1, the mobile device 300 comprises a lighted display screen 322 having a keyboard 332 displayed thereon. The front face 370 of the mobile device 300 has a navigation row 70 and a key field 650 that includes alphanumeric keys 630, alphabetic keys 632, numeric keys 642, and other function keys as shown in FIG. 1. The order of the letters of the alphabetic keys 632 on the presently disclosed mobile device 300 can be described as being of a traditional, but non-ITU Standard E.161 layout. This terminology has been utilized to delineate the fact that such a telephone keypad as depicted in FIG. 6 may not allow for efficient text entry on the mobile device 300.

Keys, typically of a push-button or push-pad nature, perform well as data entry devices but present problems to the operator when they must also be used to effect navigational control over a screen-cursor. In order to solve this problem the present mobile device 300, as illustrated in FIG. 1, can include an auxiliary input that acts as a cursor navigation tool 327 and which is also exteriorly located upon the front face 370 of the mobile device 300. Its front face 370 location is particularly advantageous because it makes the cursor navigation tool 327 easily thumb-actuable. A particularly usable embodiment provides the cursor navigation tool 327 in the form of a trackball 321, which is easily utilized to instruct two-dimensional screen cursor movement in substantially any direction, as well as act as an actuator when the trackball 321 is depressed like a button. The placement of the cursor navigation tool 327 can be below the display screen 322. As illustrated, the cursor navigation tool 327 is also beneath the keyboard 332.

The mobile device 300 can also be configured to send and receive voice communications such as mobile telephone calls. To facilitate telephone calls, two call keys 605, 609 ("outer keys") are provided in the navigation row 70 (so-called because it includes the cursor navigation tool 327) at the outer ends of the navigation row 70. One of the two call keys is a call initiation key 605, and the other is a call termination key 609. The navigation row 70 also includes another pair of keys ("flanking keys") that are located immediately adjacent to the cursor navigation tool 327, with one flanking key on either side of the cursor navigation tool 327. It is noted that the outer keys are referred to as such not because they are necessarily the outermost keys in the navigation row - there may be additional keys located even further outwardly of the outer keys if desired - but rather because they are located outwardly with respect to the flanking keys. The flanking keys may, for instance, constitute the menu keys 652, which include a menu call-up key 606 and an escape or back key 608. The menu call-up key 606 is used to bring up a menu on the display screen 322 and the escape key 608 is used to return to the previous screen or previous menu selection. The functions of the call keys and the menu keys may be provided by buttons that are located elsewhere on the mobile device 300, with different functions assigned to the outer keys and the flanking keys. In at least one embodiment, the menu keys 652 and call keys 605, 609 are physically depressible keys and the other input keys are part of touch-sensitive keyboard 640. In yet another embodiment the menu keys 652 and call keys 605, 609 are also arranged on a touch-sensitive keyboard.

Additionally, the mobile device 300 can be equipped with components to enable operation of various programs, as shown in FIG. 2. In an examplary embodiment, the flash memory 324 is enabled to provide a storage location for the operating system 357, device programs 358, and data. The operating system 357 is generally configured to manage other programs 358 that are also stored in memory 324 and executable on the processor 338. The operating system 357 honors requests for services made by programs 358 through predefined program 358 interfaces. More specifically, the operating system 357 typically determines the order in which multiple programs 358 are executed on the processor 338 and the execution time allotted for each program 358, manages the sharing of memory 324 among multiple programs 358, handles input and output to and from other device subsystems 342, and so on. In addition, operators can typically interact directly with the operating system 357 through a user interface usually including the keyboard 332 and display screen 322. While in an examplary embodiment the operating system 357 is stored in flash memory 324, the operating system 357 in other embodiments is stored in read-only memory (ROM) or similar storage element (not shown). As those skilled in the art will appreciate, the operating system 357, device program 358 or parts thereof may be loaded in RAM 326 or other volatile memory.

In one examplary embodiment, the flash memory 324 contains programs 358 for execution on the mobile device 300 including an address book 352, a personal information manager (PIM) 354, and the device state 350. Furthermore, programs 358 and other information 356 including data can be segregated upon storage in the flash memory 324 of the mobile device 300.

When the mobile device 300 is enabled for two-way communication within the wireless communication network 319, it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, Evolution Data Only (EV-DO) network, High-Speed Packet Access (HSPA) network, Universal Mobile Telecommunication Service Time Division Duplexing (UMTS-TDD) networks, Ultra Mobile Broadband (UMB) network, Worldwide Interoperability for Microwave Access (WiMAX) network, and other networks that can be used for data and voice, or just data or voice. For the systems listed above, the mobile device 300 must be properly enabled to transmit and receive signals from the communication network 319. Other systems may not require such identifying information. GPRS, UMTS, and EDGE require the use of a Subscriber Identity Module (SIM) in order to allow communication with the communication network 319. Likewise, most CDMA systems require the use of a Removable Identity Module (RUIM) in order to communicate with the CDMA network. The RUIM and SIM card can be used in multiple different mobile devices 300. The mobile device 300 may be able to operate some features without a SIM/RUIM card, but it will not be able to communicate with the network 319. A SIM/RUIM interface 344 located within the mobile device 300 allows for removal or insertion of a SIM/RUIM card (not shown). The SIM/RUIM card features memory and holds key configurations 351, and other information 353 such as identification and subscriber related information. With a properly enabled mobile device 300, two-way communication between the mobile device 300 and communication network 319 is possible.

If the mobile device 300 is enabled as described above or the communication network 319 does not require such enablement, the two-way communication enabled mobile device 300 is able to both transmit and receive information from the communication network 319. The transfer of communication can be from the mobile device 300 or to the mobile device 300. In order to communicate with the communication network 319, the mobile device 300 in the presently described examplary embodiment is equipped with an integral or internal antenna 318 for transmitting signals to the communication network 319. Likewise the mobile device 300 in the presently described examplary embodiment is equipped with another antenna 316 for receiving communication from the communication network 319. These antennae (316, 318) in another examplary embodiment are combined into a single antenna (not shown). As one skilled in the art would appreciate, the antenna or antennae (316, 318) in another embodiment are externally mounted on the mobile device 300.

When equipped for two-way communication, the mobile device 300 features a communication subsystem 311. As is well known in the art, this communication subsystem 311 is modified so that it can support the operational needs of the handheld device 300. The subsystem 311 includes a transmitter 314 and receiver 312 including the associated antenna or antennae (316, 318) as described above, local oscillators (LOs) 313, and a processing module 320 which in the presently described examplary embodiment is a digital signal processor (DSP) 320.

It is contemplated that communication by the mobile device 300 with the wireless network 319 can be any type of communication that both the wireless network 319 and mobile device 300 are enabled to transmit, receive and process. In general, these can be classified as voice and data. Voice communication is communication in which signals for audible sounds are transmitted by the mobile device 300 through the communication network 319. Data is all other types of communication that the mobile device 300 is capable of performing within the constraints of the wireless network 319.

Example device programs that can depend on such data include email, contacts and calendars. For each such program synchronization with home-based versions on the programs can be critical for either or both of their long term and short term utility. As an example, emails are often time sensitive, so substantially real time synchronization is highly desirable. Contacts, on the other hand, can be usually updated less frequently without inconvenience. Therefore, the utility of the mobile device 300 can be significantly enhanced when connectable within a communication system, and particularly when connectable on a wireless basis in a network 319 in which voice, text messaging, and other data transfer are accommodated.

In at least one embodiment, the mobile device 300 is sized to be held in an operator's hands. While some operators will grasp the mobile device 300 in both hands, it is intended that a predominance of operators will cradle the mobile device 300 in one hand in such a manner that input and control over the mobile device 300 can be effected using the thumb of the same hand in which the mobile device 300 is held. However, it is appreciated that additional control can be effected by using both hands. As a mobile device 300 that is easy to grasp and desirably pocketable, the size of the mobile device 300 must be kept commensurately small. Of the mobile device's dimensions, limiting its width is important for the purpose of assuring cradleability in an operator's hand. Moreover, it is preferred that the width of the mobile device 300 be maintained at less than eight centimeters (approximately three inches). Keeping the mobile device 300 within these dimensional limits provides a hand cradleable unit that operators prefer for its usability and portability. Limitations with respect to the height (length) of the mobile device 300 are less stringent when considering hand-cradleability. Therefore, in order to gain greater size, the mobile device 300 can be advantageously elongated so that its height is greater than its width, but still remains easily supported and operated in one hand. As shown in FIG. 1, the mobile device 300 is of unibody construction. While the above description has been provided for a mobile device 300 that is a handheld communication device, other embodiments are contemplated as described herein and the above description is examplarily only.

To facilitate textual data entry into the mobile device 300, an alphabetic keyboard 332 is provided on the display screen 322. In the examplary illustrated embodiment, a full alphabetic keyboard 332 is utilized in which there is one key per letter (with some of the letter keys also having numbers, symbols, or functions associated with them). In this regard, the associated letters can be advantageously organized in QWERTY, QWERTZ, AZERTY, or Dvorak layouts, among others, thereby capitalizing on certain operators' familiarity with these various letter orders. In order to stay within the bounds of the limited front surface area, however, each of the keys must be commensurately small when, for example, twenty-six keys must be provided in the instance of the English language.

The keyboard 332 includes a plurality of visible input keys 410 that can be of a software nature, typically constituted by virtual representations of physical keys on a display screen 322. Alternatively, the keyboard 332 can be a fixed layout of visible input keys 410 and is contact-sensitive. Each visible input key 410 of the plurality of keys has at least one actuable action which can be the input of a character, a command or a function. In this context, "characters" are contemplated to examplarily include alphabetic letters, language symbols, numbers, punctuation, insignia, icons, pictures, and even a blank space. Input commands and functions can include actions such as delete, backspace, moving a cursor up, down, left or right, initiating an arithmetic function or command, initiating a command or function specific to an program 358 or feature in use, initiating a command or function programmed by the operator and other such commands and functions that are well known to those persons skilled in the art. Specific keys or other types of input devices can be used to navigate through the various programs 358 and features thereof. Further, depending on the program 358 or feature in use, specific keys can be enabled or disabled.

In at least one embodiment, all or a portion of the plurality of keys have one or more indicia representing character(s), command(s), and/or functions(s) displayed at their top surface and/or on the surface of the area adjacent the respective visible input key 410. In the instance where the indicia of a visible input key's function is provided adjacent the visible input key 410, the indicia can be printed on the mobile device cover beside the visible input key 410, or in the instance of visible keys 410 on a touch sensitive display screen, the indicia can be located adjacent the demarked visible input key 410. Additionally, current indicia for the visible input key 410 may be temporarily shown nearby the visible input key 410 on the display screen 322.

In the case of visible input keys 410 on a display screen 322, which in one embodiment can input data associated with the visible input key 410 by touching the display screen 322, for example, with a stylus or fingertip. Some examples of display screens 322 capable of detecting a touch include resistive, capacitive, projected capacitive, infrared and surface acoustic wave (SAW) touchscreens.

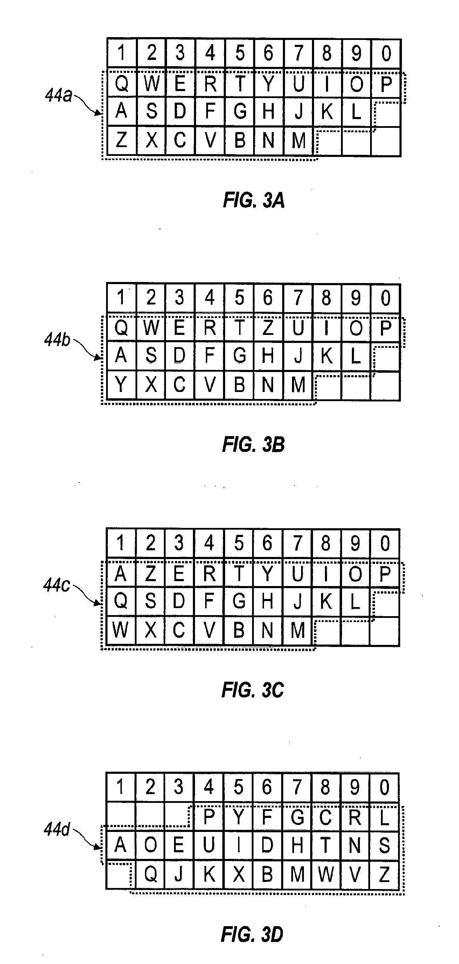

The various characters, commands, and functions associated with keyboard typing in general are traditionally arranged using various conventions. The most common of these in the United States, for instance, is the QWERTY keyboard layout. Others include the QWERTZ, AZERTY, and Dvorak keyboard configurations. The QWERTY keyboard layout is the standard English-language alphabetic key arrangement 44a shown in FIG. 3A. The QWERTZ keyboard layout is normally used in German-speaking regions; this alphabetic key arrangement 44b is shown in FIG. 3B. The AZERTY keyboard layout 44c is normally used in French-speaking regions and is shown in FIG. 3C. The Dvorak keyboard layout was designed to allow typists to type faster; this alphabetic key arrangement 44d is shown in FIG. 3D. In other examplary embodiments, keyboards having multi-language key arrangements can be implemented.

Alphabetic key arrangements are often presented along with numeric key arrangements. Typically, the numbers 1-9 and 0 are positioned in the row above the alphabetic keys 44a-d, as shown in FIG. 3A-D. Alternatively, the numbers share keys with the alphabetic characters, such as the top row of the QWERTY keyboard. Yet another examplary numeric key arrangement is shown in FIG. 4, where a "ten-key" style numeric keypad 46 is provided on a separate set of keys that is spaced from the alphabetic/numeric key arrangement 44. The ten-key styled numeric keypad 46 includes the numbers "7", "8", "9" arranged in a top row, "4", "5", "6" arranged in a second row, "1", "2", "3" arranged in a third row, and "0" in a bottom row.

Further, a numeric phone key arrangement 42 is exemplarily illustrated in FIG. 5. As shown, the numeric phone key arrangement 42 may utilize a surface treatment in the center of the "5" key. This surface treatment is configured such that the top surface of the key is distinct from the surface of other keys. Preferably the surface treatment is in the form of a raised bump or recessed dimple 43. Alternatively, raised bumps may be positioned on the housing around the "5" key and do not necessarily have to be positioned directly on the key.

FIGS. 5 and 6 both feature numeric keys arranged according to the ITU Standard E.161 form. In addition, FIG. 6 also incorporates alphabetic characters according to the ITU Standard E.161 layout as well.

As described above, the International Telecommunications Union ("ITU") has established phone standards for the arrangement of alphanumeric keys. The standard phone numeric key arrangement shown in FIGS. 5 (no alphabetic letters) and 6 (with alphabetic letters) corresponds to ITU Standard E.161, entitled "Arrangement of Digits, Letters, and Symbols on Telephones and Other Devices That Can Be Used for Gaining Access to a Telephone Network." This standard is also known as ANSI TI.703-1995/1999 and ISO/IEC 9995-8:1994. As shown in FIG. 1, the numeric key arrangement can be overlaid on a QWERTY arrangement. The numeric arrangement as shown can be aptly described as a top-to-bottom ascending order three-by-three-over-zero pattern.

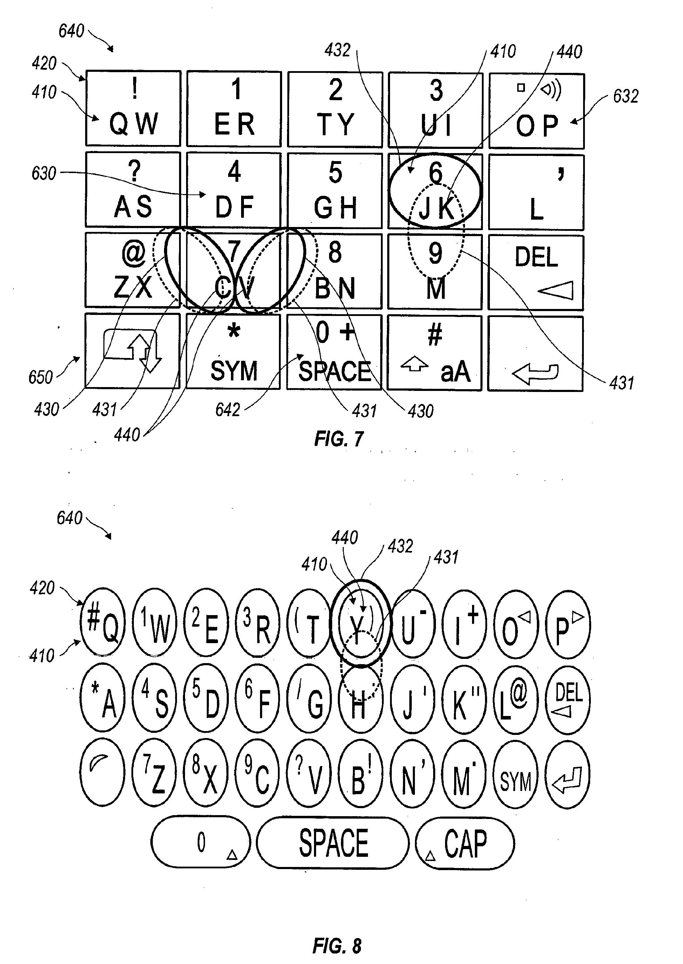

An examplary reduced keyboard layout having a QWERTY arrangement of letter is illustrated in FIG. 7. In this reduced keyboard layout, more than one alphabetic character is present on at least some keys of the keyboard. For example, as shown in the particular reduced keyboard layout of FIG. 7, alphabetic characters "Q" and "W" share the same key. In addition to alphabetic and numeric characters, the keyboard layout includes keys associated with command and functions, such as delete, return, and shift.
Referencing again to FIG. 1, there is shown an examplary embodiment having a full alphabetic keyboard layout. In particular, as shown in FIG. 1, only one letter of the alphabet is associated with any given alphabetic key within the keys of the key field 650. Additionally, some of the alphabetic keys also have numbers, symbols, or functions associated with them. This is in contrast to the examplary embodiment of FIG. 7 having a reduced keyboard layout, in which multiple letters of the alphabet may be associated with at least some of the alphabetic keys of a keyboard 332. Nonetheless, while the alphabetic keys 632 (including those also having numbers, symbols, or functions associated with them) of the examplary embodiments of FIG. 1 or FIG. 7 are arranged in a QWERTY arrangement, any other full-keyboard arrangements (such as QWERTZ, AZERTY, Dvorak or the like) may also be implemented within the scope of this disclosure. These familiar keyboard layouts allow operators to type more intuitively and quickly than, for example, on the standard alphabetic layout on a telephone pad. As mentioned above, the key arrangements can be reduced compared to a standard layout through the use of more than one letter or character per key. By utilizing fewer keys, the keys can be made larger and therefore more convenient to the operator. While the above description generally describes the systems and components associated with a mobile device 300, the below described input device could be associated with another communication device such as a PDA, a laptop computer, desktop computer, a server, or other communication device. In those embodiments, different components of the above system might be omitted in order provide the desired communication device.

Many operators of mobile devices 300 continue to seek an increased display area while at the same time seeking to have a smaller device. In this trade off, manufacturers seek to increase the size of the display screen 322 while allowing for reliable data entry using a keyboard 332. To this end, the keyboard 332 can be integrated as a virtual keyboard 332 on the display screen 322. However, the lack of tactile feedback can be frustrating to the operator when inputting data via the virtual keyboard 332. For example, if an operator desires to input a character and touches the visible input key 410 with a fingernail, the character input from the virtual keyboard 332 could be different character than the one selected by the fingernail. Since the fingertip contacts an area adjacent to the fingernail, the contact area registered by the touchscreen could be a combination of the fingertip and fingernail or in some cases may be entirely based on the fingertip rather than the fingernail.

In order to accommodate for the increasing use of touchscreens or other input devices based upon sensed touch, contact, or proximity, the disclosure increases the accuracy of inputting the character or item as selected by the operator. The disclosure presented below accommodates an operator's particular style of entry either through an offset based upon all the visible input keys 410 or upon each individual visible input key 410. While the below is described in relation to a touchscreen, other devices which function similarly are considered within the scope of this disclosure.

Touch-sensitive keyboards 640, as illustrated in FIGS. 1 and 7-11, can be provided using a separate piece of hardware or can be provided as a portion of the display screen 322, which can be a touchscreen. While reference herein below is generally described in relation to the touch-sensitive keyboard 640 as part of the display screen 322, it can be appreciated that the touch-sensitive keyboard 640 can be provided as a separate component from the display screen 322. When the touch-sensitive keyboard 640 is provided as a portion of the display screen 322, the plurality of keys can be displayed on the display screen 322 in response to a currently running program or in response to an operator command. The ability to disable or otherwise hide the touch-sensitive keyboard 640 allows for the program to maximize the viewable area to an operator of the mobile device 300. The touch-sensitive keyboard 640 can consist of a variety of different layouts depending upon the particular program running on the microprocessor 338. For instance, when a telephone function is running on the microprocessor 338, a numeric telephone keypad (e.g. arranged in accordance with the ITU Standard E.161) can be provided on the display screen 322. Similarly, when the mobile device 300 is enabled for text entry, the touch-sensitive keyboard 640 can be arranged with an alphabetic and numeric layout or alphabetic only layout. The alphabetic characters can be arranged in one of the above described arrangements. Additionally, the keys can be provided with numeric characters which can be simultaneously shown on the keys. Alternatively, the keys with numeric characters can be provided separately from the keys with alphabetic characters. In other embodiments, the plurality of keys may be arranged such that some of the keys have a combination of alphabetic characters and numeric characters shown on the same key.

As illustrated in FIG. 1, a mobile device 300 having a touch-sensitive keyboard 640 and a display screen 322 is shown with an program page from an email program. The touch-sensitive keyboard 640 can have a plurality of visible input keys 410 for inputting of data into the mobile device 300. In at least one embodiment, the display screen 322 is a touch-sensitive display screen and the touch-sensitive keyboard 640 is provided as a portion of the touch-sensitive display screen. In the illustrated example, the operator is typing the words "Good morning" with the alphabetic character "g" not yet input into the mobile device 300. When the operator selects the key associated with the alphabetic character "g", the touch-sensitive keyboard 640 registers engagement of a contact-zone. The microprocessor 338 which is communicatively connected between the display screen 322 and touch-sensitive keyboard 640 determines which key has been actuated and which associated character should be shown on the display screen 322.

In this disclosure reference is generally made to inputting of characters and commands and likewise displaying the characters and commands on the display screen 322, however it is contemplated that some characters or commands may not be shown on the display screen 322. For instance, passwords may be entered without displaying the corresponding character on the display screen 322. In the instance of entering passwords character entry delimiters - such as dots or asterisks - may be used instead of displaying actual characters. Furthermore, in at least one embodiment, no character or character entry delimiters may be displayed. While the keyboard layouts presented in FIGS. 1 and 7-10 are generally arranged in a QWERTY layout, one of the above described layouts can be implemented instead. While the touch-sensitive keyboard 640 is generally referenced herein to characters for text entry, the disclosure equally applies to other touch-sensitive arrangements as required for data entry. For example, a few boxes having associated functions maybe provided on the display screen 322 of a airport check-in kiosk, automated teller machine, or other similar device. When an operator wishes to input a given character or command provided on the touch-sensitive keyboard 640, the operator selects one of the visible input keys 410 that includes indicia associated with the desired character for inputting.

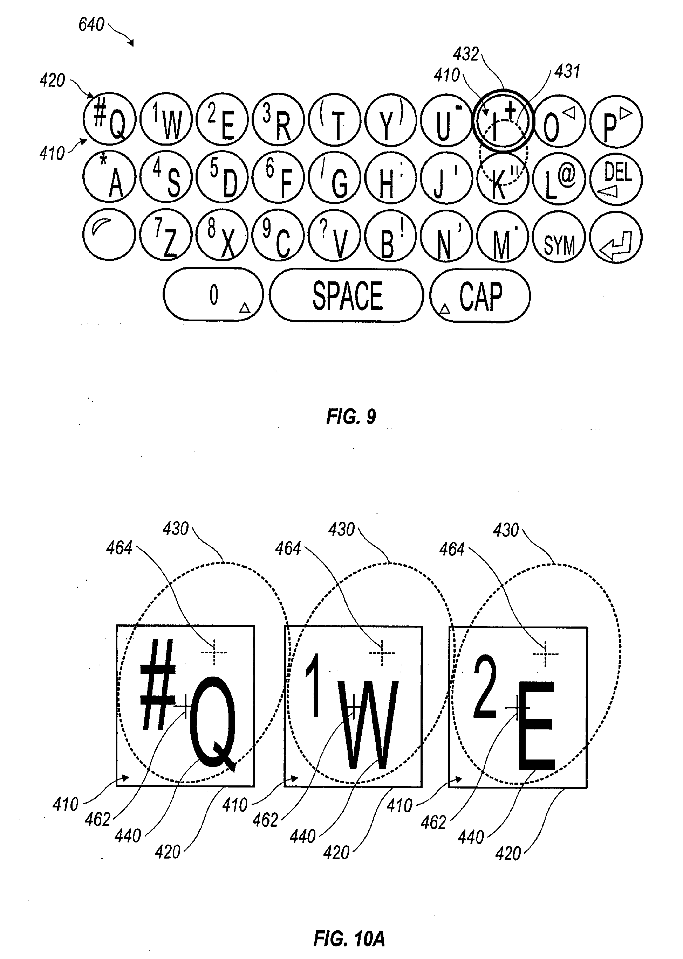

The illustrated embodiments of FIGS. 1 and 7-11, provide a touch-sensitive keyboard 640 with target zone 432 that defines the visible input keys 410. In at least one embodiment, at least one of the visible input keys 410 is defmed by a closed line 420 presented on the touch-sensitive keyboard 640. For example, the keyboard 640 as illustrated in FIG. 1 has keys defined by a closed line 420 that is substantially square. As illustrated in FIG. 7, the closed line 420 can be substantially rectangular in shape. In FIG. 8, the closed line 420 is illustrated as substantially oval in shape. In FIG. 9, the closed line 420 is illustrated as substantially circular in shape. While the above described embodiments illustrate different ways to define the target zone 432 for the visible input keys 410, other ways of delineating the keys are also considered within the scope of this disclosure. In at least one embodiment, the target zone is provided through the characters that are presented on the display screen 322. While the illustrated embodiments can be displayed on a display screen 322, it is also contemplated that the illustrated embodiments could be fixed or permanently displayed such that the presentation of the visible input keys 410 is always present. Furthermore, other type of characters, symbols, or commands could be included in the visible input keys 410. In yet another embodiment, the visible input keys 410 can be identified through the use of a colored background (not shown). Alternatively, the characters shown on the visible input keys 410 can be included within the target zone 432 without including a closed line 420 around the target zone 432.

The embodiments presented in FIGS. 7-10 also illustrate a contact-zone 430 and offset contact-zone 431. When the operator wishes to input a character, a microprocessor-run program identifies an offset contact-zone 431 on the touch-sensitive keyboard 640 that corresponds to a proximate visible input key 410. The program normalizes the identified offset contact-zone 431 into registration with the corresponding proximate visible input key 410 so that sensed contacts at the offset contact-zone 431 actuates an input to the mobile device 300 associated with the corresponding visible input key 410. When an operator wishes to select a given visible input key 410 or character 440 from the touch-sensitive keyboard 640, the operator actuates the desired visible input key 410 or character 440. As illustrated in FIG. 7, the visible input key 410 is defined by a closed line. The normal contact zone 430 used to determine if the operator intended to actuate the input key 410 is provided for illustration purposes. This normal contact zone 430 is the area in which the program expects to receive operator initiated contact with the touch-sensitive keyboard 640. Generally, the microprocessor is able to distinguish the intended visible input key 410 of actuation based upon actuation within the contact zone 430. While one contact zone 430 with respect to the visible input key 410 having alphabetic characters "J" and "K" is illustrated, it can be appreciated that the other keys would have similar arrangements.

Additionally as illustrated with respect to FIG. 7, an offset-contact zone 430 can be implemented on a per character basis. When a reduced keyboard layout in which more than one character 440 is associated with at least one visible input key 410, the disambiguation routine can be augmented or replaced using a corrective-learning routine. For instance an operator wishing to select the "V" character could select the character by touching within the contact zone 430 associated with letter "V." In at least one embodiment, the corrective-learning routine implements an offset-contact zone 431 associated with the letter "V." Likewise, the corrective-learning routine can be implemented with respect to the letter "C." In this example, the contact zone 430 is associated with the letter "C." The corrective-learning routine implements an offset-contact zone 431 associated with the letter "C." The corrective-learning routine could likewise be implemented to cover other visible input keys 410 that have more than one character 440 associated therewith. In at least one embodiment, the corrective-learning routine may also distinguish between inputting of letters, numbers, symbols or other such indicia associated with a given key.

When an operator makes contact with the touch-sensitive keyboard 640 using a finger or thumb, the contact area can typically be described as an oval. An example of the area of operator contact is generally like that of the offset contact-zone 431 as illustrated in FIG. 7. The relative size of the operator contact area can be smaller or larger depending upon the size of the visible input keys 410 and the operator's thumbs or other digits used to actuate the visible input keys 410. The size operator contact area is described for illustrative purposes only and other sizes are contemplated within this disclosure. Furthermore, the relative size of the keys may change. As illustrated in FIG. 7, the touch-sensitive keyboard 640 is a reduced keyboard layout having at least one visible input key 410 on which multiple alphabetic characters are displayed.

When the touch-sensitive keyboard 640 has a reduced number of visible input keys 410, the corrective-learning routine can distinguish which alphabetic letter should be input based upon the contact zone 430 or the offset contact-zone 431. In other embodiments, a disambiguation routine is implemented, whereby the disambiguation routine determines the most likely character of the plurality of characters associated with the key to be input into mobile device 300. Alternatively, the disambiguation routine can receive additional data from the corrective-learning routine to further aid in the selection of the appropriate character to be input.

Additionally, the corrective-learning routine can base the selection of the character 440 or visible input key 410 using the angularity of the offset-contact zone 431. The angularity, with respect to a vertical axis, of the offset contact-zone can indicate which finger or thumb was used in actuation of the visible input key 410. For instance, as illustrated by offset-contact zones 431 adjacent to the visible input key 410 bearing alphabetic characters "CV", the slope of the offset-contact zones 430 corresponds to the slope of the finger or thumb used to actuate the visible input key 410. For instance the offset-contact zone 431 on the left hand side of the visible input key 410 can be associated with primarily a right thumb actuation. Likewise, the offset-contact zone 431 on the right hand side of the visible input key 410 can be associated with primarily a left thumb actuation.

In the embodiments illustrated in FIGS. 8 and 9, the offset-contact zone 431 is shown with respect to different keys and arrangements. In FIG. 8, one visible input key 410 is associated with the letter "Y." When the operator wishes to select the letter "Y", the microprocessor 338 receives a signal indicative of actuation of area within the target zone 432 on the touch-sensitive keyboard 640. Using the above disclosed offset-contact zone 431, the corrective-learning routine program has adjusted the area of actuation to coincide with the offset-contact zone 431. This offset-contact zone 431 can be adjusted as the operator continues to select the visible input key 410 associated with the letter "Y". This offset-contact zone 431 accounts for the operator mis-striking the target zone 432. Likewise, if the operator wishes to actuate the visible input key 410 associated with the letter "I" as illustrated in FIG. 9, the operator seeks to actuate the target zone 432. If the operator mis-strikes the target zone 432, the corrective-learning routine may implement an offset-contact zone 431 to account for the operator mis-striking the target zone 431. The distance between the offset-contact zones 431 and the target zones 432 are shown for illustrative purposes only and the distance between the offset-contact zone 431 and the target zone 432 may be closer or further apart.

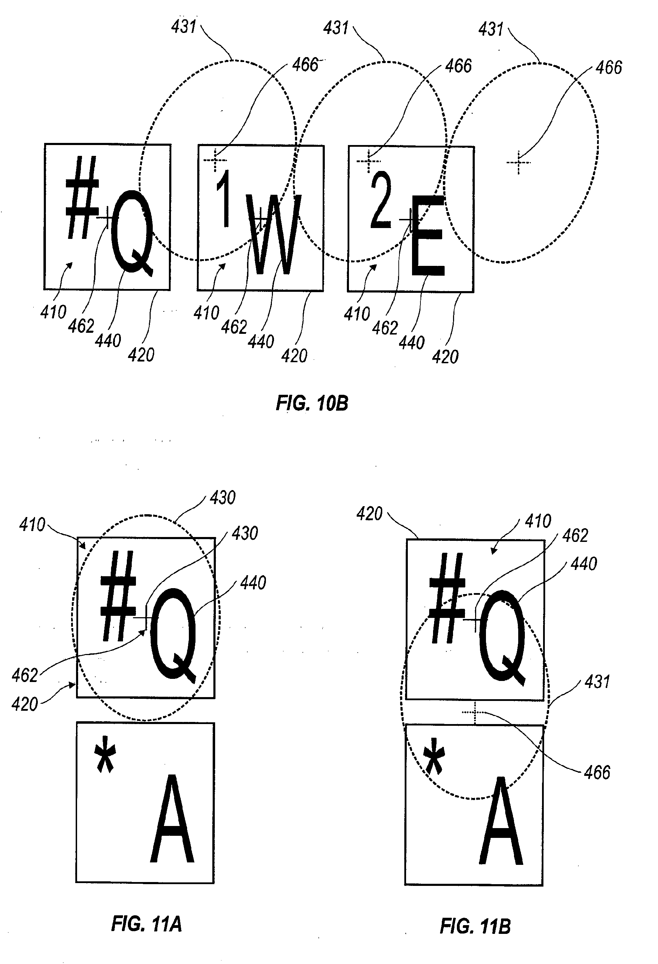

FIGS. 10A and 10B illustrate close-up views of three visible input keys 410 of a touch-sensitive keyboard 640, such as the one illustrated in FIG. 1. It can be appreciated that the following description can apply to other arrangements of keys. Furthermore, while three visible input keys 410 are illustrated, the following description can apply to a single visible input key 410 or multiple visible input keys 410.

When determining the relationship between the contact strike zone, the microprocessor-run program can define the contract strike-zone based upon a location of the contact-strike zone and the associated key, character, or command. In at least one embodiment, the contact strike-zone is based upon a distance between an aggregation of the plurality of strike location data and the associated visible input key. In at least one example, the distance is measured from the centroid of the aggregation of the plurality of strike location data to the centroid of the associated visible input key. The centroid of the aggregation of the plurality of the strike location data can be determined using a weighted average of the detected points of contact with the surface. In one embodiment, the centroid of the strike location data can be determined by taking an average of the x locations and an average of the y locations and positioning the centroid at location of the average of x and y locations. The centroid of the visible input key can be the center of the displayed key. Where the visible input key is represented by a character or the like, the centroid can be based upon the particular shape of the character.

When an operator decides to select a particular character, function or command, the operator must actuate the contact-zone 430 on the touch-sensitive keyboard 640 corresponding to the particular character, function or command. For illustrative purposes, consider an operator that wishes to input the alphabetic character 440 "Q." As illustrated in FIG. 10A, the contact-zone 430 is associated with visible input key 410 associated with the alphabetic character 440 "Q." If the contact zone 410 is actuated by the operator, the microprocessor 338 receives data indicating that the letter "Q" is to be input. The visible input key 410 associated with the alphabetic character 440 "Q" can further be defined by the closed line 420 which in the illustrated embodiment is substantially rectangular in shape. The shape of closed line 420 defming the key can be one of those as described above. Additionally, the centroid 462 of visible input key 410 is denoted by the marker for the visible input key 410 associated with the alphabetic character 440 "Q." The centroid 464 of the contact-zone 430 associated with "Q" is denoted by the dashed marker. Likewise, the centroid 462 of the visible input key 410 associated with the "W" is denoted by the middle marker near the center of the visible input key 410 and the centroid 464 of the contact-zone 430 associated with "W" is denoted by middle dashed marker. Additionally, the centroid 462 of the visible input key 410 associated with the "E" is denoted by the right most maker near the center of the visible input key 410 and the centroid 464 of the contact-zone 430 associated with "E" is denoted by the right most dashed marker.

While in most circumstances the operator can properly actuate the visible input key 410 using the associated contact-zone 430, the operator may actuate a portion of the touch-sensitive keyboard 640 that is not associated with the desired character, command, or function. For example, the operator may use a fmer nail or fingertip to make the selection, but a majority of the area of contact with the touch-sensitive keyboard 640 is outside of the contact-zone 430 associated with a visible input key 410. In these situations, the present disclosure provides for an offset contact-zone 431 which can be modified to allow for inputting a desired character, command, or function.

In order to accommodate the entry of a character using the offset contact-zone 431, the microprocessor 338 is programmed with a corrective-learning routine. The microprocessor-run program identifies an offset contact-zone 431 on the touch-sensitive keyboard 640 that corresponds to a proximate visible input key 410. Additionally, the microprocessor-run program normalizes the identified offset contact-zone 431 into registration with the corresponding proximate visible input key 410 so that sensed contacts at the offset contact-zone 431 actuates an input to the mobile device 300 of the character or other command associated with the corresponding visible input key 410. An example of this can be understood in relation to FIG. 10A and 10B. An offset contact-zone 431 for the alphabetic characters "Q," "W," and "E" are illustrated by the dashed ovals. The microprocessor-run program normalizes the identified offset contact-zone 431 into registration with the corresponding proximate visible input key 410 so that sensed contact at the offset contact-zone 431 inputs one of the letters "Q," "W." "E," numbers "1" or "2", and symbol "#," when the offset contact-zone 431 is actuated which corresponds to one of the visible input keys 41- bearing the respective characters.

In at least one embodiment, the microprocessor-run program associates the offset contact-zone 431 with a corresponding character to form a corrected-to-character association. This corrected-to-character association allows for adjustment of the offset contact-zone 431 on a character by character basis or a visible input key 410 by visible input key basis as will be described later. In the illustrated embodiment shown in FIG. 10B, the leftmost offset contact-zone 431 is associated with the alphabetic character 440 "Q." This association can be based in part upon the proximity to the character or through another association routine as will be described below. The microprocessor-run program receives strike location and utilizes the corrective learning routine to associate each strike location data with the corrected-to-character. The strike location data can be generated by the program based upon data received from the touch-sensitive keyboard 640 that indicates location of the strike location. The touch-sensitive keyboard 640 can make use of the above described touch-sensitive devices. Some of the touch-sensitive devices as described can be actuated without physical contact with the device surface.

The offset contact-zone 431 of FIG. 10B is shifted from a contact-zone 430 location as illustrated in FIG.10A. This shift in location can be performed on an individual visible input key 410 basis, alphabetic character 440 basis, other character basis, command basis, or other desired association. The offset contact-zone 431 can be based on the above description such that a centroid 466 of the offset contact-zone 431 can be determined based upon the strike location data associated for a particular visible input key 410. For instance, if the operator intends to strike the visible input key 410 associated with "Q" and strikes outside the area demarked by the contact-zone 430, the corrective-learning routine is implemented. The offset contact-zone 431 can be further adjusted as required based upon continued actuation by the operator. The strike location data can be used to form a corrected-to-character association based upon characters, input keys, commands and the like. For example, the offset contact-zone 431 could be associated with the alphabetic character 440 "Q" rather than with the visible input key 410. If multiple characters or other indicia are included on the key, it is possible to have multiple offset contact-zones 431 associated with a given visible input key 410, but restricted to a displayed character or other indicia.

In the instance that the offset contact zone 431 is associated with a visible input key 410, the offset contact-zone 431 can be defined using a variety of different methods, a few of which are described below. In one example the offset contact-zone 431 is defined based on a distance between an aggregation of the plurality of strike location data and the associated visible input key 410. The distance can be measured from the centroid of the strike location data to the centroid 462 of the associated visible input key 410. In the illustrated example, the centroid 462 of the associated visible input key 410 is denoted by markers. In one embodiment, the centroid of the strike location data is also used. In the illustrated figures, the centroids of the strike location data corresponds to the centroids 466 of the offset contact-zone which are illustrated by dashed markers. When strike information is received its proximity and centroid can be compared to the centroid of the offset contact-zone 431 as well to determine if the strike information should be associated with a given character 440 or visible input key 410.

Another arrangement for aligning a visible input key 410 on a touch-sensitive keyboard 640 with a corresponding offset contact-zone 431 can be described in relation to FIGS. 11A-C. As illustrated in FIG. 11A, a visible input key 410 is presented on the touch-sensitive surface for actuation by the operator. Typically the target for the visible input key 410 is the centroid 462 of the key as demarked by the marker. If the contact-zone 430 aligns over the center point of the key no offset is required. In this instance, the centroid 464 of the contact-zone 430 indicated by marker is aligned with the marker associated with the centroid 462 of the visible input key 410.

However, some operators may touch the center of the key with their fingertips such that the portion engaged is indicated by the offset contact-zone 431 in FIG. 11B. In the illustrated embodiment of FIG. 11B, the center of the operator's finger tip could be aligned over the center of the of visible input key 410, yet the centroid 466 denoted by dashed marker of the offset contact-zone 431 is outside the area associated with target zone 432 the visible input key 410. In this instance, the corrective-learning routine can align the centroid 466 of the offset contact-zone 431 with the centroid 462 of the visible input key 410. Additionally, when a capacitive sensor is used the portion of the finger actually engaging the touch-sensitive surface may not correspond to the same area recorded by the sensor. For example, the portion of an operator's finger that contacts the surface may be defmed by the area inside the offset contact-zone 431 and inside the closed line 420. Since the touch-sensitive sensor is based upon capacitance, the area recorded by the sensor remains defined by the offset contact-zone 431.

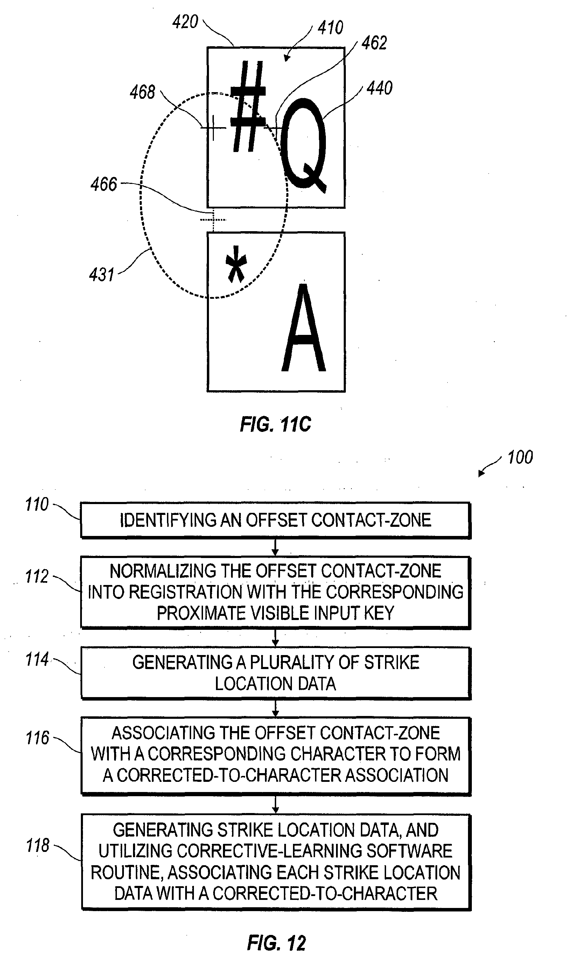

In yet another embodiment as illustrated in FIG. 11C, the operator strikes the edge of the visible input key 410 using a finger tip much like that of FIG. 11B except that the point of contact is directed towards the side of the visible input key 410. The intended point of contact 468 is the point where the operator was intending to strike the visible input key 410. If the touch-sensitive keyboard uses the centroid 466 defined by dashed marker of the offset contact-zone 431 for inputting the visible input key 410, the centroid 466 is outside the area associated with the visible input key 410. The corrective-learning routine can align the offset contact-zone 431 so that it is associated with the visible input key 410. While the above examples have been provided in relation to the alignment of offset contact-zone 431 with the visible input key 410, other positioning and alignment of the offset contact-zone 431 with the visible input key 410 would be appreciated by one having ordinary skill in the art. These examples are provided for illustrative purposes and do not limit the claimed subject matter.

In at least another embodiment illustrated in FIG. 12, a method 100 for aligning a visible input key on a touch-sensitive keyboard 640 of a mobile device 300 is presented. A corresponding offset contact-zone 431 to the visible input key 410 is identified utilizing a microprocessor-run program. The microprocessor-run program can include a corrective-learning routine. The method 100 includes identifying an offset contact-zone 431 on the touch-sensitive keyboard 640 that correspond to a proximate visible input key 410 utilizing the corrective-learning routine (block 110). Additionally, the method 100 includes normalizing the identified offset contact-zone 431 into registration with the corresponding proximate visible input key 410 so that sensed contacts at the offset contact-zone 431 actuates an input to the mobile device 300 associated with the corresponding visible input key 410 (block 112). The method 100 also generates a plurality of strike location data (block 114). The strike location data can be generated by the operator of the mobile device 300 contacting or otherwise engaging the touch-sensitive keyboard 640 of the mobile device 300. The method can be applied to a character, a plurality of characters, a key, a plurality of keys, or other identified objects for operator selection.

In at least one embodiment, the method 100 further comprises associating the offset contact-zone 431 with a corresponding character to form a corrected-to-character association (block 116). The corrected-to-character association allows for the appropriate selection of a character 440 when the offset contract-zone 431 is actuated by the operator. The method 100 can further generate strike location data, and utilizing the corrective-learning routine, associate each strike location data with a corrected-to-character (block 118). The association of the strike location data can be as described above such that the corrective-learning routine can be adapted based upon further strike location data.

In another embodiment, the touch-sensitive keyboard 640 includes a plurality of characters 440, each associated with a location on the keyboard 640. The plurality of characters 440 can be arranged in one of the above described layouts such as QWERTY and QWERTZ. The method can further identify a plurality of offset contact-zones 431 that correspond to proximately located characters 440. This allows the method to associate each of the offset contact-zones 431 with a corresponding character 440 to form a corrected-to-character association. Additionally, the method 100 can include generating a plurality of strike location data, and utilizing the corrective-learning software routine, associating each strike location data with a corresponding corrected-to-character.

In yet another embodiment, the touch-sensitive keyboard 640 includes a plurality of visible input keys 410, each associated with a location on the keyboard 640 and having at least one character 440 associated therewith. The visible input keys 410 can be defmed as described above. The method further includes identifying a plurality of offset contact-zones 431 on the touch-sensitive keyboard 640 that each correspond to one of the visible input keys 410. Additionally, the method 100 further includes associating each of the offset contact-zones 431 with a corresponding character 440 to form a corrected-to-character association. In at least one embodiment, the method 100 further includes generating a plurality of strike location data, and utilizing the corrective-learning software routine, associating each of said plurality of strike location data to a corrected-to-character.

In at least one embodiment, a mobile device 300 capable of aligning a visible input key on a touch-sensitive keyboard 640 of the mobile device 300 with a corresponding offset contact-zone 431 is disclosed. The mobile device 300 can include a microprocessor 338 that is capable of running a program that includes a corrective-learning routine. The alignment of the visible input key 410 with a corresponding offset contact-zone 431 can be performed using the corrective-learning routine. The mobile device 300 can further include a housing 371 and a display screen 322. A microprocessor 338 can be communicatively connected between the display screen 322 and the touch-sensitive keyboard 640. The microprocessor-run program can identify an offset contact-zone 631 on the touch-sensitive keyboard 640 that corresponds to a proximate visible input key 410 so that sensed contacts at the offset contract-zone 431 actuates an input to the mobile device 300 associated with the corresponding visible input key 410. The corrective-learning routine can implement one or more of the above described routines to associate the offset-contact zone 431 with a visible input key 410 or character 440.

Examplary embodiments have been described hereinabove regarding both mobile devices 300, as well as the communication networks 319 within which they operate. Again, it should be appreciated that the focus of the present disclosure is aligning a visible input key on a touch-sensitive keyboard with a corresponding offset contact-zone. Various modifications to and departures from the disclosed embodiments will occur to those having skill in the art.

## Claims

1. A method for aligning a character of a plurality of characters associated with a visible input key (410) on a touch-sensitive reduced keyboard (640) of a mobile device (300) with a corresponding offset contact-zone (431) identified utilizing a microprocessor-run program that includes a corrective-learning routine, said method comprising:
identifying, utilizing the corrective-learning routine, an angularity with respect to a vertical axis of an offset contact-zone (431) on the touch-sensitive keyboard (640) that corresponds to a proximate character of the visible input key (410) wherein multiple alphabetic letters are associated with the visible input key; and,
normalizing the identified offset contact-zone (431) into registration with the corresponding proximate character so that a sensed contacts at the offset contact-zone (431) actuates an input to the mobile device (300), the input being associated with the corresponding character of the visible input key (410).

2. The method as recited in claim 1, further comprising associating the angularity with respect to a vertical axis of an offset contact-zone (431) with a corresponding character (440) to form a corrected-to-character association.

3. The method as recited in claim 2, further comprising generating strike location data, and utilizing the corrective-learning routine, associating each strike location data with a corrected-to-character.

4. The method as recited in claim 3, wherein the touch-sensitive keyboard (640) includes a plurality of characters (440), each associated with a location on the keyboard (640).

5. The method as recited in claim 4, further comprising identifying a plurality of angularities with respect to a vertical axis of offset contact-zones (431) that correspond to proximately located characters.

6. The method as recited in claim 5, further comprising associating each of the angularities with respect to a vertical axis of offset contact-zones (431) with a corresponding character (440) to form a corrected-to-character association.

7. The method as recited in claim 6, further comprising generating a plurality of strike location data, and utilizing the corrective-learning routine, associating each strike location data with a corresponding corrected-to-character.

8. The method as recited in any one of claims 3 to 7, further comprising defining the offset contact-zone (431) based on a distance between an aggregation of the plurality of strike location data and the associated visible input key (410).

9. The method as recited in claim 8, wherein said distance is measured from the centroid of the aggregation of the plurality of strike location data to the centroid (462) of the associated visible input key (410).

10. The method as recited in any one of claims 1 to 9, wherein said plurality of characters includes both numerals and letters.

11. A mobile device (300) capable of aligning a character of a plurality of characters associated with a visible input key (410) on a touch-sensitive reduced keyboard (640) of the mobile device (300) with a corresponding offset contact-zone (431) identified utilizing a microprocessor-run program that includes a corrective-learning routine, said mobile device (300) comprising:
a housing (371) having a display screen (322) mounted and a touch-sensitive keyboard (640) thereon;
a microprocessor communicatively connected between the display screen (322) and the touch-sensitive keyboard (640); and
a microprocessor-run program that identifies, utilizing the corrective-learning routine, an angularity with respect to a vertical axis of an offset contact-zone (431) on the touch-sensitive keyboard (640) and that normalizes the identified offset contact-zone (431) into registration with the corresponding proximate character of the visible input key (410) so that a sensed contacts at the offset contact-zone (431) actuates an input to the mobile device (300), the input being associated with the corresponding character of the visible input key (410), wherein multiple alphabetic letters are associated with the visible input key.

12. The mobile device (300) as recited in claim 11, wherein the microprocessor-run program associates the angularity with respect to a vertical axis of an offset contact-zone (431) with a corresponding character to form a corrected-to-character association.

13. The mobile device (300) as recited in claim 12, wherein the microprocessor-run program generates strike location data and utilizes the corrective-learning routine to associate each strike location data with a corrected-to-character.

14. The mobile device (300) as recited in claim 13, wherein the touch-sensitive keyboard (640) includes a plurality of characters (440), each associated with a location on the keyboard (640).

15. The mobile device (300) as recited in claim 14, wherein the microprocessor-run program identifies a plurality of angularities with respect to a vertical axis of offset contact-zones (431) that correspond to proximately located characters.

16. The mobile device (300) as recited in claim 15, wherein the microprocessor-run program associates each of the angularities with respect to a vertical axis of offset contact-zones (431) with a corresponding character (440) to form a corrected-to-character association.

17. The mobile device (300) as recited in claim 16, wherein the microprocessor-run program generates a plurality of strike location data and utilizes the corrective-learning routine to associate each strike location data with a corresponding corrected-to-character.

18. The mobile device (300) as recited in any one of claims 13 to 17, further comprising defining the contact strike-zone (431) based on a distance between an aggregation of the plurality of strike location data and the associated visible input key (410).

19. The mobile device (300) as recited in claim 18, wherein said distance is measured from the centroid of the aggregation of the plurality of strike location data to the centroid (462) of the associated visible input key (410).

20. The mobile device as recited in any one of claims 11 to 19, wherein said plurality of characters includes both numerals and letters.

## Patentansprüche

1. Verfahren zum Ausrichten eines Zeichens aus einer Vielzahl von Zeichen, die mit einer sichtbaren Eingabetaste (410) auf einer berührungsempfindlichen reduzierten Tastatur (640) einer Mobilvorrichtung (300) verknüpft sind, mit einer entsprechenden versetzten Kontaktzone (431), die unter Verwendung eines von einem Mikroprozessor betriebenen Programms identifiziert ist, das eine korrigierend lernende Routine aufweist, wobei das Verfahren Folgendes aufweist:
Identifizieren einer Winkligkeit bezüglich einer vertikalen Achse einer versetzten Kontaktzone (431) auf der berührungsempfindlichen Tastatur (640) unter Verwendung der korrigierend lernenden Routine, wobei jene einem nahegelegenen Zeichen der sichtbaren Eingabetaste (410) entspricht, wobei mehrere alphabetische Buchstaben mit der sichtbaren Eingabetaste verknüpft sind, und
Normalisieren der identifizierten versetzten Kontaktzone (431) in eine Registrierung mit dem entsprechenden nahegelegenen Zeichen, so dass ein erfasster Kontakt(e) an der versetzten Kontaktzone (431) eine Eingabe an die Mobilvorrichtung (300) auslöst, wobei die Eingabe mit dem entsprechenden Zeichen der sichtbaren Eingabetaste (410) verknüpft ist.

2. Verfahren nach Anspruch 1, ferner mit Verknüpfen der Winkligkeit bezüglich einer vertikalen Achse einer versetzten Kontaktzone (431) mit einem entsprechenden Zeichen (440), um eine Korrekturzeichen-Verknüpfung zu erstellen.

3. Verfahren nach Anspruch 2, ferner mit Erzeugen von Auftreffstellenangaben und Verknüpfen jeder Auftreffstellenangabe unter Verwendung der korrigierend lernenden Routine mit einem Korrekturzeichen.

4. Verfahren nach Anspruch 3, wobei die berührungsempfindliche Tastatur (640) eine Vielzahl von Zeichen (440) aufweist, wobei jedes mit einer Stelle auf der Tastatur (640) verknüpft ist.

5. Verfahren nach Anspruch 4, ferner mit Identifizieren einer Vielzahl von Winkligkeiten bezüglich einer vertikalen Achse versetzter Kontaktzonen (431), die nahegelegen angeordneten Zeichen entsprechen.

6. Verfahren nach Anspruch 5, ferner mit Verknüpfen jeder der Winkligkeiten bezüglich einer vertikalen Achse versetzter Kontaktzonen (431) mit einem entsprechenden Zeichen (440), um eine Korrekturzeichen-Verknüpfung zu erstellen.

7. Verfahren nach Anspruch 6, ferner mit Erzeugen einer Vielzahl von Auftreffstellenangaben und Verknüpfen jeder Auftreffstellenangabe unter Verwendung der korrigierend lernenden Routine mit einem entsprechenden Korrekturzeichen.

8. Verfahren nach einem der Ansprüche 3 bis 7, ferner mit Festlegen der versetzten Kontaktzone (431) aufgrund einer Entfernung zwischen einer Ansammlung einer Vielzahl von Auftreffstellenangaben und der verknüpften sichtbaren Eingabetaste (410).

9. Verfahren nach Anspruch 8, wobei die Entfernung von dem Schwerpunkt der Ansammlung der Vielzahl von Auftreffstellenangaben zum Schwerpunkt (462) der verknüpften der sichtbaren Eingabetaste (410) gemessen wird.

10. Verfahren nach einem der Ansprüche 1 bis 9, wobei die Vielzahl von Zeichen sowohl Zahlen als auch Buchstaben aufweist.

11. Mobilvorrichtung (300), die fähig ist, ein Zeichen einer Vielzahl von Zeichen, die mit einer sichtbaren Eingabetaste (410) auf einer berührungsempfindlichen reduzierten Tastatur (640) der Mobilvorrichtung (300) verknüpft sind, mit einer entsprechenden versetzten Kontaktzone (431) auszurichten, die unter Verwendung eines von einem Mikroprozessor betriebenen Programms identifiziert ist, das eine korrigierend lernende Routine aufweist, wobei die Mobilvorrichtung (300) Folgendes aufweist:
ein Gehäuse (371), das eine Anzeige (322) befestigt hat, und eine berührungsempfindliche Tastatur (640) darauf hat,
einen Mikroprozessor, der kommunikativ zwischen der Anzeige (322) und der berührungsempfindlichen Tastatur (640) verbunden ist, und
ein von einem Mikroprozessor betriebenes Programm, das unter Verwendung der korrigierend lernenden Routine eine Winkligkeit bezüglich einer! vertikalen Achse einer versetzten Kontaktzone (431) auf der berührungsempfindlichen Tastatur (640) identifiziert, und das die identifizierte versetzte Kontaktzone (431) in eine Registrierung mit dem entsprechenden nahegelegenen Zeichen der sichtbaren Eingabetaste (410) normalisiert, so dass ein erfasster Kontakt(e) an der versetzten Kontaktzone (431) eine Eingabe an die Mobilvorrichtung (300) auslöst, wobei die Eingabe mit dem entsprechenden Zeichen der sichtbaren Eingabetaste (410) verknüpft ist, wobei mehrere alphabetische Buchstaben mit der sichtbaren Eingabetaste verknüpft sind.

12. Mobilvorrichtung (300) nach Anspruch 11, wobei das von dem Mikroprozessor betriebene Programm die Winkligkeit bezüglich einer vertikalen Achse einer versetzten Kontaktzone (431) mit einem entsprechenden Zeichen verknüpft, um eine Korrekturzeichen-Verknüpfung zu erstellen.

13. Mobilvorrichtung (300) nach Anspruch 12, wobei das von dem Mikroprozessor betriebene Programm Auftreffstellenangaben erzeugt und die korrigierend lernenden Routine verwendet, um jede Auftreffstellenangabe mit einem Korrekturzeichen zu verknüpfen.

14. Mobilvorrichtung (300) nach Anspruch 13, wobei die berührungsempfindliche Tastatur (640) eine Vielzahl von Zeichen (440) aufweist, wobei jedes mit einer Stelle auf der Tastatur (640) verknüpft ist.

15. Mobilvorrichtung (300) nach Anspruch 14, wobei das von dem Mikroprozessor betriebene Programm eine Vielzahl von Winkligkeiten bezüglich einer vertikalen Achse versetzter Kontaktzonen (431) identifiziert, die nahegelegen angeordneten Zeichen entsprechen.

16. Mobilvorrichtung (300) nach Anspruch 15, wobei das von dem Mikroprozessor betriebene Programm jede der Winkligkeiten bezüglich einer vertikalen Achse versetzter Kontaktzonen (431) mit einem entsprechenden Zeichen (440) verknüpft, um eine Korrekturzeichen-Verknüpfung zu erstellen.

17. Mobilvorrichtung (300) nach Anspruch 16, wobei das von dem Mikroprozessor betriebene Programm eine Vielzahl von Auftreffstellenangaben erzeugt, und die korrigierend lernende Routine verwendet, um jede Auftreffstellenangabe mit einem entsprechenden Korrekturzeichen zu verknüpfen.

18. Mobilvorrichtung (300) nach einem der Ansprüche 13 bis 17, ferner mit Festlegen der Kontakt-Auftreff-Zone (431) aufgrund einer Entfernung zwischen einer Ansammlung einer Vielzahl von Auftreffstellenangaben und der verknüpften sichtbaren Eingabetaste (410).

19. Mobilvorrichtung (300) nach Anspruch 18, wobei die Entfernung von dem Schwerpunkt der Ansammlung der Vielzahl von Auftreffstellenangaben zum Schwerpunkt (462) der verknüpften sichtbaren Eingabetaste (410) gemessen wird.

20. Mobilvorrichtung nach einem der Ansprüche 11 bis 19, wobei die Vielzahl von Zeichen sowohl Zahlen als auch Buchstaben aufweist.

## Revendications

1. Procédé d'alignement d'un caractère d'une pluralité de caractères associés à une touche de saisie visible (410) d'un clavier tactile réduit (640) d'un dispositif mobile (300) muni d'une zone de contact décalée correspondante (431) identifiée en utilisant un programme exécuté par microprocesseur qui comprend une routine d'apprentissage correctif, ledit procédé comprenant :
l'identification, en utilisant la routine d'apprentissage correctif, d'une angularité par rapport à un axe vertical d'une zone de contact décalée (431), sur le clavier tactile (640), qui correspond à un caractère proche de la touche de saisie visible (410), plusieurs lettres alphabétiques étant associées à la touche de saisie visible ; et
la normalisation de la zone de contact décalée identifiée (431) en correspondance avec le caractère proche correspondant de sorte qu'un contact détecté au niveau de la zone de contact décalée (431) déclenche une entrée sur le dispositif mobile (300), l'entrée étant associée au caractère correspondant de la touche de saisie visible (410).

2. Procédé selon la revendication 1, comprenant en outre l'association de l'angularité par rapport à un axe vertical d'une zone de contact décalée (431) à un caractère correspondant (440) afin de former une association corrigée par rapport à un caractère.

3. Procédé selon la revendication 2, comprenant en outre la génération de données d'endroit d'impact, et l'utilisation de la routine d'apprentissage correctif, en associant chaque donnée d'emplacement d'impact à un caractère corrigé.

4. Procédé selon la revendication 3, dans lequel le clavier tactile (640) comprend une pluralité de caractères (440), chacun associé à un emplacement sur le clavier (640).

5. Procédé selon la revendication 4, comprenant en outre l'identification d'une pluralité d'angularités par rapport à un axe vertical de zones de contact décalées (431) qui correspondent à des caractères proches.

6. Procédé selon la revendication 5, comprenant en outre l'association de chacune des angularités par rapport à un axe vertical de zones de contact décalées (431) à un caractère correspondant (440) afin de former une association corrigée par rapport à un caractère.

7. Procédé selon la revendication 6, comprenant en outre la génération d'une pluralité de données d'emplacement d'impact, et l'utilisation de la routine d'apprentissage correctif, en associant chaque donnée d'emplacement d'impact à un caractère corrigé correspondant.

8. Procédé selon l'une quelconque des revendications 3 à 7, comprenant en outre la définition de la zone de contact décalée (431) sur la base d'une distance entre une agrégation de la pluralité de données d'emplacement d'impact et la touche de saisie visible associée (410).

9. Procédé selon la revendication 8, dans lequel ladite distance est mesurée entre le centre de l'agrégation de la pluralité de données d'emplacement d'impact et le centre (462) de la touche de saisie visible associée (410).

10. Procédé selon l'une quelconque des revendications 1 à 9, dans lequel ladite pluralité de caractères comprend des chiffres et des lettres.

11. Dispositif mobile (300) capable d'aligner un caractère d'une pluralité de caractères associés à une touche de saisie visible (410) d'un clavier tactile réduit (640) du dispositif mobile (300) avec une zone de contact décalée correspondante (431) identifiée en utilisant un programme exécuté par microprocesseur qui comprend une routine d'apprentissage correctif, ledit dispositif mobile (300) comprenant :
un boîtier (371) ayant un écran d'affichage (322) et un clavier tactile (640) montés dessus ;
un microprocesseur relié entre l'écran d'affichage (322) et le clavier tactile (640) ; et
un programme exécuté par microprocesseur qui identifie, en utilisant la routine d'apprentissage correctif, une angularité par rapport à un axe vertical d'une zone de contact décalée (431) sur le clavier tactile (640), et qui normalise la zone de contact décalée identifiée (431) en correspondance avec le caractère proche correspondant de la touche de saisie visible (410) de sorte qu'un contact détecté au niveau de la zone de contact décalée (431) déclenche une entrée sur le dispositif mobile (300), l'entrée étant associée au caractère correspondant de la touche de saisie visible (410), plusieurs lettres alphabétiques étant associées à la touche de saisie visible.

12. Dispositif mobile (300) selon la revendication 11, dans lequel le programme exécuté par microprocesseur associe l'angularité par rapport à un axe vertical d'une zone de contact décalée (431) à un caractère correspondant afin de former une association corrigée par rapport à un caractère.

13. Dispositif mobile (300) selon la revendication 12, dans lequel le programme exécuté par microprocesseur génère des données d'emplacement d'impact et utilise la routine d'apprentissage correctif afin d'associer chaque donnée d'emplacement d'impact à un caractère corrigé.

14. Dispositif mobile (300) selon la revendication 13, dans lequel le clavier tactile (640) comprend une pluralité de caractères (440), chacun associé à un emplacement sur le clavier (640).

15. Dispositif mobile (300) selon la revendication 14, dans lequel le programme exécuté par microprocesseur identifie une pluralité d'angularités par rapport à un axe vertical de zones de contact décalées (431) qui correspondent à des caractères proches.

16. Dispositif mobile (300) selon la revendication 15, dans lequel le programme exécuté par microprocesseur associe chacune des angularités par rapport à un axe vertical de zones de contact décalées (431) à un caractère correspondant (440) afin de former une association corrigée par rapport à un caractère.

17. Dispositif mobile (300) selon la revendication 16, dans lequel le programme exécuté par microprocesseur génère une pluralité de données d'emplacement d'impact et utilise la routine d'apprentissage correctif afin d'associer chaque donnée d'emplacement d'impact à un caractère corrigé correspondant.

18. Dispositif mobile (300) selon l'une quelconque des revendications 13 à 17, comprenant en outre la définition de la zone de contact (431) sur la base d'une distance entre une agrégation de la pluralité de données d'emplacement d'impact et la touche de saisie visible associée (410).

19. Dispositif mobile (300) selon la revendication 18, dans lequel ladite distance est mesurée entre le centre de l'agrégation de la pluralité de données d'emplacement d'impact et le centre (462) de la touche de saisie visible associée (410).

20. Dispositif mobile selon l'une quelconque des revendications 11 à 19, dans lequel ladite pluralité de caractères comprend des chiffres et des lettres.
